(19) Europäisches Patentamt
European Patent Office
Office européen des brevets

(11) EP 2 018 040 A1

(12) EUROPEAN PATENT APPLICATION

(43) Date of publication:
**21.01.2009 Bulletin 2009/04**

(51) Int Cl.:
***H04N 1/40*** *(2006.01)* ***H04N 1/52*** *(2006.01)*

(21) Application number: **07014205.4**

(22) Date of filing: **19.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **HEWLETT-PACKARD DEVELOPMENT COMPANY, L.P.**
**Houston TX 77070 (US)**

(72) Inventors:
- **Jodra, Rodolfo**
  **Boise, Idaho 83714-0021 (US)**
- **Shacham, Omri**
  **Rehovot 76101 (IL)**
- **Fischer, Mani**
  **Haifa 3200 (IL)**

(74) Representative: **Samson & Partner**
**Widenmayerstrasse 5**
**80538 München (DE)**

(54) **Contouring reduction in halftoning**

(57) A method is provided of transforming continuous-tone values to a halftone representation with halftone dot patterns. A dot pattern is composed of dots, a dot is composed of a plurality of pixels, wherein a pixel can be assigned zero intensity, or one out of a set of intermediate intensities or full intensity. The transformation is such that a first continuous-tone value is transformed into a number of pixels of zero intensity, a number of pixels of the one or more intermediate intensities, and a number of pixels of full intensity. A second, higher continuous-tone value is transformed into a reduced number of pixels of zero intensity and a correspondingly increased number of pixels with full intensity, while leaving the number of pixels of the one or more intermediate intensities substantially constant.

*Fig. 13*

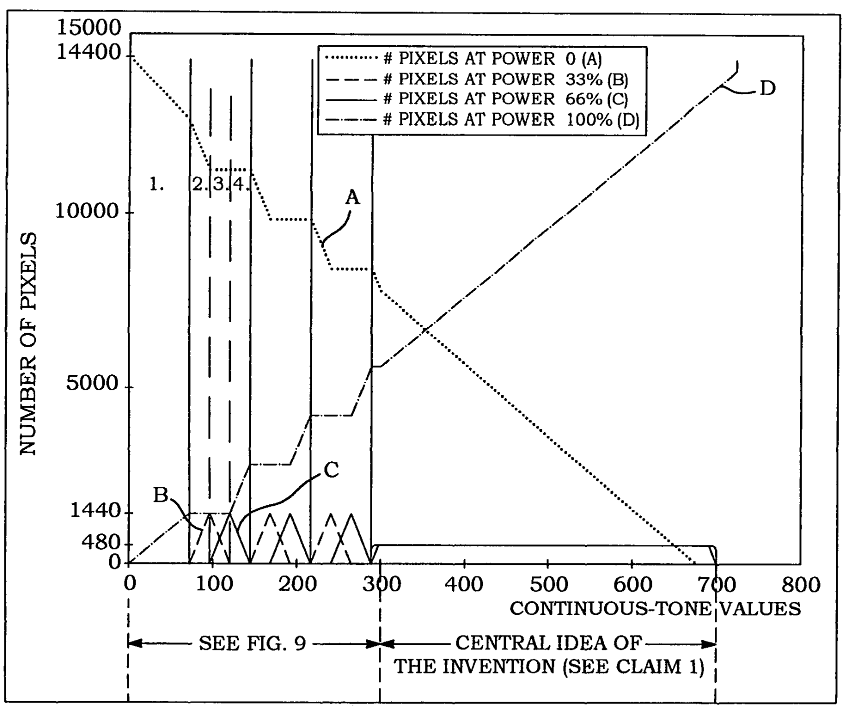


EP 2 018 040 A1

## Description

### FIELD OF THE INVENTION

The present invention refers to halftoning techniques and, for example, to halftoning techniques which reduce contouring effects.

### BACKGROUND OF THE INVENTION

Conventional printers, for example electrophotographic printers for use in the office or home for printing out images (e.g. photographs) use a process of digital halftoning to convert electronic image data into print instructions sent to a printer in order to print a plurality of small dots onto a printing medium, to create an image on the printing medium. In particular, halftoning is used for printing images having varying shades of color or gray, such as photographs.

Halftoning is the transformation of a grayscale or color image to a pattern (screen) of pixels with a limited number of colors (e.g. just black pixels on white background, or spots of the primary colors cyan, magenta and yellow), in order to make it printable. Essentially, printing is a binary process for each point on the paper: either to put toner on a paper or leave the paper uncovered. This would suggest that only binary images could be printed. However, halftoning makes it possible to reproduce so-called continuous-tone images, which are images with different shades of gray or color. The halftone process creates dot patterns on a background (e.g. white paper). When viewed from a sufficient distance, the human viewer will be unable to see the dots themselves, because they are too small. Instead, the human viewer will have the illusion of a gray or continuous-tone color. In gray-scale halftoning, only black dots are created, whereas in color halftoning dots of the three primary colors of subtractive color mixing, cyan, magenta, yellow (and black) are created and printed on top of each other.

Back in analog days, continuous-tone values were converted to halftone dot patterns in which the dots were of constant density and equally spaced, varying in size to produce the illusion of darker or lighter shades. To make a digital halftone, the printable dots are composed of pixels (an individual spot which may be printed or not), the more pixels that are set, the larger the dots appears to be. This type of halftoning is also referred to as AM (amplitude modulation). AM-halftoning varies the size of dots, but not their location. Darker areas (shadows) have larger dots and highlight areas have smaller dots. The other approach in halftoning is referred to as FM (frequency modulation) halftoning in which all dots have the same size, but their location is varied. Darker areas have more dots closer together while the lighter areas have fewer dots dispersed farther apart.

EP 0 892 549 refers to a method and apparatus for reproducing an image with gray level printing. The document addresses the problem of contouring effects in halftoning and obtains a smooth shade by building the dots in a line-type structure according to a template. Plural dots of size 1 are laid down along lines according to the template. Similarly, for the next increment in gray level, up to gray level 2, the dots are laid down along the lines also according to the arrangement, but all are of size 2. The template arrangement for growth is similarly used for growth to successive gray levels. The process continues by building multiple pixel dots at each gray level on top of the line structure so as to produce a more stable line structure.

### SUMMARY OF THE INVENTION

According to one aspect, a method is provided of transforming continuous-tone values to a halftone representation with halftone dot patterns. A dot pattern is composed of dots, and a dot is composed of a plurality of pixels. A pixel can be assigned zero intensity, or one out of a set of intermediate intensities or full intensity, wherein the transformation is such that a first continuous-tone value is transformed into a number of pixels of zero intensity, a number of pixels of the one or more intermediate intensities, and a number of pixels of full intensity. A second, higher continuous-tone value is transformed into a reduced number of pixels of zero intensity and a correspondingly increased number of pixels with full intensity, while leaving the number of pixels of the one or more intermediate intensities substantially constant.

According to another aspect, a printing system is provided for transforming continuous-tone values to a halftone representation with halftone dot patterns. A dot pattern is composed of dots, and a dot is composed of a plurality of pixels. A pixel can be assigned zero intensity, or one out of a set of intermediate intensities or full intensity. The printing system is programmed to perform the transformation which is such that a first continuous-tone value is transformed into a number of pixels of zero intensity, a number of pixels of the one or more intermediate intensities, and a number of pixels of full intensity. A second, higher continuous-tone value is transformed into a reduced number of pixels of zero intensity and a correspondingly increased number of pixels with full intensity, while leaving the number of pixels of the one or more intermediate intensities substantially constant.

According to yet another aspect, a computer program product is provided which is either in the form of a machine-readable medium with program code stored on it, or in the form of a propagated signal including a representation of program code. The program code is arranged to carry out a method, when executed on a computer system, of transforming continuous-tone values to a halftone representation with halftone dot patterns. A dot pattern is composed of dots, a dot is composed of a plurality of pixels. A pixel can be assigned zero intensity, or one out of a set of intermediate intensities or full intensity. The transformation is such that a first continuous-tone value is transformed into a number of pixels of zero intensity, a number of pixels of the one or more intermediate intensities, and a number of pixels of full intensity. A second, higher continuous-tone value is transformed into a reduced number of pixels of zero intensity and a correspondingly increased number of pixels with full intensity, while leaving the number of pixels of the one or more intermediate intensities substantially constant.

Other features are inherent in the methods and products disclosed or will become apparent to those skilled in the art from the following detailed description of embodiments and its accompanying drawings.

BRIEF DESCRIPTION OF THE DRAWINGS

Embodiments of the invention will now be described, by way of example, and with reference to the accompanying drawings, in which

Fig. 1 shows an electrophotographic printer;
Fig. 2 shows a printing system including the electrophotographic printer of Fig. 1 which incorporates the present invention;
Fig. 3a shows the dot structure of a cyan halftone tile;
Fig. 3b shows the dot structure of a magenta halftone tile;
Fig. 4 shows the pixel structure of a 40 x 40 super-tile which is composed of 4 cyan tiles with modified center pixel positions;
Fig. 5 shows a 120 x 120 super-tile which is replicated over the image to be reproduced;
Fig. 6 illustrates dot growth by adding exposure;
Fig. 7 illustrates the growth of dots in a linearized manner;
Fig. 8 shows a distribution of pixels of different exposures with totally regular clusters against increasing continuous-tone values to be represented;
Fig. 9 illustrates an increase in density when doing two uniform steps;
Fig. 10 shows changes in the numbers of pixels;
Fig. 11 shows an increase in density when two uniform steps are performed;
Fig. 12 shows changes in the numbers of pixels;
Fig. 13 shows a distribution of pixels in which the numbers of pixels with intermediate exposures are equal in shadow regions, according to embodiments of the invention;
Fig. 14 illustrates an increase of density, according to embodiments of the invention;
Fig. 15 shows a shift of pixels into higher exposures, according to embodiments of the invention.

The drawings and the description of the drawings are of embodiments of the invention and not of the invention itself.

DESCRIPTION OF THE PREFERRED EMBODIMENTS

Fig. 1 shows an electrophotographic printer. However, before proceeding further with the description of Fig. 1, a few items of the embodiments will be discussed.

In some of the embodiments, continuous-tone values are transformed to a halftone representation with halftone dot patterns. A dot pattern is composed of dots. A dot is composed of a plurality of pixels, wherein a pixel can be assigned zero intensity, or one out of a set of intermediate intensities or full intensity. The transformation is such that a first continuous-tone value is transformed into a number of pixels of zero intensity, a number of pixels of the one or more intermediate intensities, and a number of pixels of full intensity. A second, higher continuous-tone value is transformed into a reduced number of pixels of zero intensity and a correspondingly increased number of pixels with full intensity, while leaving the number of pixels of the one or more intermediate intensities substantially constant.

It should be mentioned that the term "pixel" refers to an individual spot which is printed with full intensity, or an intermediate intensity or zero intensity. The term "dot" refers to an "agglomeration of pixels" which is also referred to as a "cluster". A "halftone dot pattern" is a printable representation of a continuous-tone value and includes dots of varying sizes, so that overall the dots simulate a certain density.

A particularly useful type of tile/screen is a regular screen, in which all the dots have the same shape. The halftone patterns produced by such screens look smooth to the eye because the dot pattern obtained is regular on paper.

In electrophotographic printing, a pixel is printed on paper by removing charges from a photoconductive drum by means of a laser. The smallest area of the photoconductor which can be exposed by the laser is a pixel. To produce a dot, the printer exposes one or several pixels, using different amounts of laser power.

In some of the embodiments, laser power levels of 0% (no exposure), 33%, 66% and 100% of the nominal power of the laser are used. However, also other values may be used in other embodiments.

The dots produced by a regular screen will all contain the same exposure. For example, the dots could contain a 100%-pixel and a 33%-pixel. The percentages are referred to as "exposure levels" and represent the fraction of the nominal laser power used to expose the pixel. When going to the next level, the dots may be created with a 100% pixel plus a 66% pixel, and on the next level with two 100% pixels. Thus, the dots at each level are larger, because there is more exposure and the optical density of the print increases.

The problem arises that the increments in density may be dependent on the level of exposure. This means the density increment when going from 33% to 66% may be significantly different from the density increment going from 66% to 100%. These unequal increments in density can be perceived as contouring effects. To overcome this problem, increments exposure of different sorts are added to the clusters so that uniform increments in dot size may be obtained.

In some of the embodiments, only the absolute numbers of pixels with the different intensities needed to obtain the desired continuous-tone value are regarded, while the location of pixels is not taken into account.

In other embodiments, when going from the representation of the first continuous-tone value to the second, higher continuous-tone value, some pixels of zero intensity are changed into the first intermediate intensity, and some pixels of any intermediate intensity are changed into the next higher intermediate intensity and some pixels of the highest intermediate intensity are changed into the full intensity. Hence, in these embodiments, the location of the individual pixels with the different intensities are taken into account.

While in some of the embodiments, the number of pixels of intermediate intensities is kept constant for representing continuous-tone values of whatever lightness, in other embodiments, the number of pixels of intermediate intensities is kept constant only of continuous-tone values pertaining to shadow areas, while the numbers of pixels with intermediate intensities are varied to obtain regular dot patterns (all dots have the same shape) in highlight areas.

While in some of the embodiments, the term "intensities" may be interpreted as the power levels of a laser of an electrophotographic printer, in other embodiments, the term may refer to the amount of ink provided for printing a pixel in a color inkjet printer.

In some of the embodiments, the intermediate intensities are 33% and 66% of the full intensity and may refer - in the case of laser printers - to the power levels used to obtain different exposures of a pixel. In some of the embodiments, a dot is composed of ten pixels.

In other embodiments, the halftone dot patterns for representing highlight continuous-tone values have regular dot patterns, and the halftone dot patterns representing darker continuous-tone values have irregular dot patterns.

In some of the embodiments, a dot turn-on is defined by means of a halftone tile indicating the positions of center pixels of dots.

In other embodiments, halftone tiles modified according to a halftone frequency response optimization are put together to form a super-tile to increase periodicity of the halftone dot patterns.

In some of the embodiments, the halftone tiles for different primary colors are obtained by rotating the tile through an angle. The rotation of halftone tiles is performed to avoid undesirable moiré-patterns.

In some of the embodiments, dot growth is defined by means of tiles containing threshold values which are compared with the continuous-tone values of the image which is to be reproduced. If the value of the image is higher (or lower) than the threshold value, then a pixel of the dot is activated, i.e. ink is printed in that pixel, (or not). The threshold matrices are designed in such a way that the number of pixels set is substantially proportional to the continuous-tone value to be reproduced, and that an individual dot grows in a certain geometric form, e.g. in the form of an approximated circle, ellipse or as a line, which first grow along its length, and then in its width. The term "dot turn-on" refers to an order in which centers of dots are activated, whereas the term "dot growth" denotes the order in which individual pixels of a dot are activated to define a certain shape of the dot.

In some of the embodiments, the halftone tiles are such that the dots grow to form lines when going from a low continuous-tone value to a high continuous-tone value.

Some of the embodiments of the computer program product with program code for performing the described methods include any machine-readable medium that is capable of storing or encoding the program code. The term "machine-readable medium" shall accordingly be taken to include, for example, solid-state memories and, removable and non-removable, optical and magnetic storage media. In other embodiments, the computer program product is in the form of a propagated signal including a representation of the program code, which is increasingly becoming the usual way to distribute software. The signal is, for example, carried on an electromagnetic wave, e.g. transmitted over copper cable or through the air, or a light wave transmitted through an optical fiber. The program code may be machine code or another code which can be converted into machine code, such as source code in a multi-purpose programming language, e.g. C, C++, Java, C#, etc. The embodiments of a computer system may be commercially available general-purpose computers programmed with the program code.

Fig. 1: Electrophotographic printer

Returning now to Fig. 1, which shows an electrophotographic/laser color printer 1 in which embodiments of the invention may be implemented.

The laser color printer works as follows:

1. Charging

A corona wire 2 projects an electrostatic charge onto the photoreceptor (otherwise named the photoconductor unit), which is in the example shown a set of four revolving photosensitive drums (3.1 - 3.4) for each of the primary colors cyan, magenta, yellow and black, each of which is capable of holding an electrostatic charge on its surface while it is in the dark.

2. Writing

Each laser 4 (4.1 - 4.4) is aimed at a rotating mirror 5 (5.1 -5.4), which directs the laser beam through a system of lenses and mirrors onto the photoreceptors. The beam sweeps across the photoreceptors at an angle to make the sweep straight across the page; each drum (3.1 - 3.4) continues to rotate during the sweep and the angle of sweep compensates for this motion. Lasers are used because they generate a narrow beam for great distances. The laser beam neutralizes (or reverses) the charge on the white parts, leaving a mirror image of static electricity on the photoreceptor surface to lift dry powder or liquid toner 6. A stream of halftone image data held in a memory (not shown) controls the laser 4.1 - 4.4 by turning it on and off. When powering the laser for example with 66% or 33% of its full power, the charge on the drums 3.1 - 3.4 is not fully neutralized which allows the definition of pixels of intermediate intensities.

3. Developing and transfer

The toner particles are charged, and are attracted to the areas of the photoreceptor 3 which were exposed by the laser light. Those toner particles 6 will then be transferred to paper 8 so that they form the image. In some printers the toner 6 is transferred to an intermediate transfer belt 7 or an intermediate transfer drum and then to the paper 8.

Fig. 2: Printing system

Fig. 2 is a schematic diagram of a printing system, according to embodiments of the invention, which includes a host computer 12, a monitor 13 (e.g. a CRT), and the electrophotographic printer 1 of Fig. 1.

The functionalities described herein for printing may be implemented using a combination of hardware and software, whereby portions of the hardware/software are incorporated in the host computer 12 as software, for example, in the form of a printer driver 15, and other portions are located in color laser printer 1 in the form of hardware, such as the printer controller 14, for example, a PAL, PLA or FPGA. In other words, embodiments of the invention may be implemented (a) solely as software on the computer 12, or (b) solely on the printer 1 as hardware, e.g. in the form of an intelligent printer controller 14. Alternatively, embodiments of the invention may be implemented (c) partly on the computer 12 and partly on the printer 1.The location of the hardware/software for carrying out the different aspects of the invention is a matter of design choice.

Fig. 3: Halftone tiles for cyan and magenta

Halftone tiles are matrices containing thresholds which are replicated over an image to be reproduced. According to the methods described herein, highlight areas of an image are generated with tiles of single pixels set to 100% exposure (without any further exposure added). The distribution of those initial pixels (cluster centers) - and their size - determines the perceived noise, so the selection of which pixels are turned on for each level is very critical. Fortunately, because individual dots are isolated on the page, they lend themselves to automated distribution algorithms based on frequency response. These methods return the order on which the pixels are turned on so that the visibility of the dot pattern is minimized.

As highlight areas are represented as individual pixels set to 100%, and shadow areas are represented by larger dots, the method may be conceived as a hybrid of FM- and AM-halftoning.

Fig. 3a shows a 10 x 10 tile for cyan. The crosses refer to pixels indicating cluster/dot centers ("seeds") represented as thresholds which indicate the order in which pixels of the screen are turned on, i.e. set from 0% exposure to 100% exposure to form individual dots. The distances between two crosses (cluster/dot center) is 1 in the horizontal direction and 3 in the vertical direction (m=3, n=1). The cyan tile is subdivided into four 5 x 5 cells. In the example, a dot includes 10 pixels; after the center pixel of a dot has been turned on (set to 100% exposure), the dot may grow until its ten pixels are all set to 100% with increasing continuous-tone values to be represented.

The image to be printed is digitally defined by a set of continuous-tone values (typically 8-bit for each of the primary colors cyan, magenta, yellow and black). In the halftoning method described herein, the spatial resolution is such that one continuous-tone value is represented by one dot (10 pixels), whereby a small dot will represent a small continuous-tone value (highlight color), and a larger continuous-tone value (shadow) may be represented by a larger dot, in which many pixels will be set to 100% exposure.

The magenta tile shown in Fig. 3b shows the same dot pattern as the cyan tile but is rotated by an angle to avoid any moiré-patterns in four color printing. Again, the distances between two cluster centers is 1 in the horizontal direction and 3 in the vertical direction (m=3, n=-1). The magenta tile is subdivided into four 5 x 5 cells.

Furthermore, a black tile is selected so that it does not cause moiré patterns when mixed with the patterns of other colors. A tile which generates a pattern at a 45°-angle performs well, and such patterns are commonly used when designing the black halftone. The set of tiles may be completed by an ordinary yellow tile. Please note the black and yellow tiles are not used in the methods described below and are therefore not depicted.

<u>Fig. 4: Dot turn-on</u>

Fig. 4 refers to a 40 x 40 super-tile which is composed of four cyan tiles shown in Fig. 3a. To avoid any repeating patterns in the screens, for each dot center, one among several pixel positions close to the dot center is chosen. Thus, the resulting dots are not uniformly distributed but overall the appearance is smooth because the frequency response of the dot pattern has thereby been optimized for low visibility. Fig. 4 - an example of the cyan screen - shows how some dots have been replaced relative to the regular cyan tile shown in Fig. 3a. Some dots are located on the dot center and others above the dot center (the shifts are indicated by arrows).

When adding exposure for darker tints, the exposure is added to each dot in the same order which was used when turning on the dots in the highlights.

<u>Fig. 5: 120 x 120 super-tile</u>

Fig. 5 shows an 120 x 120 super-tile which is composed of 144 10 x 10-tiles shown in Fig. 3. As shown in Fig. 4, the pixel structure is not the same for all the individual 10 x 10 tiles since the frequency optimization algorithm has generated 144 slightly different tiles. The actual transformation of the digitally represented image to the halftone image will be performed by repeating such a 120 x 120 halftone super-tile across the image.

<u>Fig. 6: Dot growth in regular clusters</u>

Fig. 6 shows the dot growth after one pixel has been activated for each dot. Up to here, generating dot patterns for increasing continuous-tone values was done according to an FM-halftoning procedure. From here on, with increasing continuous-tone values to be represented, the individual dots (which are only pixel) start growing and become clusters according to an AM-halftoning procedure. With growing continuous-tone values to be represented as halftone screens, the same exposure is added to each dot, so that the dot structure is/remains regular.

In the left part of the figure, which refers to a small continuous-tone value, only one pixel of each dot is set to 100%. In the middle part of the figure, referring to a higher continuous-tone value, some of the one-pixel dots have become two-pixel dots (a pixel of 100% exposure and a pixel of 33% exposure). It should be mentioned that the 100%-pixels are extended with a 33%-pixel in the same order as the 100% had been activated in the dot turn-on phase described above. After all dots have been transformed into two neighboring 100%-pixels, the dots are extended by 33%-pixels in the same order as the dots have initially been turned on.

The process continues adding pixels to each cluster until all pixels in the pattern is set to 100%, for the darkest continuous-tone level.

<u>Fig. 7: Dot growth in a linearized manner</u>

As can be seen in Fig. 6, within a dot, the pixel order is defined to generate a line screen. A continuation of this process is shown in Fig. 7, in which the left-hand figure shows for cyan the further growth of dots to form a line structure, whereas the right-hand figure refers to further dot growth for magenta.

Fig. 8: Distribution of pixels with different exposures in totally regular screens

While the previous steps determined the order in which pixels are activated within each cluster and in which order the clusters are extended, Fig. 8 shows which partial exposure is selected for the activated pixels.

The distribution shown in Fig. 8 refers to a 120 x 120 super-tile having 14400 pixels to represent a continuous-tone value. It will now be explained, below, how the different dot screens are obtained starting with dot patterns for low continuous-tone values and going over to higher values.

In a first phase (dot turn-on phase), pixels are activated to 100% exposure until 1440 pixels are activated; these represent the centers of 1440 clusters/dots ("seeds"). Now, all dots include one pixel set to 100%, and the dot turn-on phase has finished. The dot turn-on phase may also be conceived as an FM-phase.

After the 1440 pixels have been set to 100%, a second phase begins which adds to each 100%-pixel a neighboring pixel with a partial exposure of 33%. According to a dot-growth definition (i.e. in which order individual pixels forming a dot are set), the pixel directly below the center pixel is set to 33%. The order of pixels set from 0% to 33% is the same as the order from 0% to 100% in the dot turn-on phase. After the second phase, each of the 1440 dots includes a pixel of 100% and a pixel of 33%.

Then, in a third phase, all 1440 33%-pixels are replaced with 66%-pixels. After the third phase, each of the 1440 two-pixel dots includes a pixel of 100% and a pixel of 66%.

Then, in a fourth phase, the 1440 66%-pixels are replaced with 100%-pixels. After the fourth phase, each of the 1440 two-pixel dots includes two pixels of 100%.

After the "two-pixels-set-per-dot-stage", a "three-pixels-set-per-dot-stage" commences in which 1440 pixels of 0% are set to 33% in the same order as defined by the dot turn-on sequence described above in the second phase. The pixel set to 33% is the pixel above the center pixel. Then, in the third phase, the 1440 pixels of 33% are increased to an exposure of 66%, and finally, the 1440 66%-pixels are set to 100% exposure. Now, all 1440 dots (clusters) include 3 pixels of 100%, and the "three-pixels-set-per-dot-stage" has finished.

The procedure (2 pixels set/dot: 2$^{nd}$ phase, 3$^{rd}$ phase, 4$^{th}$ phase; 3 pixels set/dot: 2$^{nd}$ phase, 3$^{rd}$ phase, 4$^{th}$ phase, etc.) is repeated until all 1440 dots include 10 pixels of 100% and the screen includes 14400 1 00%-pixels which corresponds to the darkest continuous-tone value which may be represented by means of a dot pattern.

Fig. 9: Two density increments within one phase

As has been mentioned in the context of Figs. 6 and 8, the individual clusters are extended by adding partial exposures. The drawback of this approach is the sensibility of the tone ramp to variations of the partial exposure. Because all the clusters use the same exposure level, variations of that exposure level have a relatively strong impact on the density produced by the tile. To achieve uniform density increases, the exposure level must be selected carefully to avoid contouring. Contouring effects come into being when a uniform increase of continuous-tone values is represented by halftone dot patterns whose increase in darkness appears to be non-uniform (yielding the impression of "jumps" in the dot patterns).

Density is the degree to which materials such as ink, paper and film absorb light. The more light one of these materials absorbs, the higher is the density. The corresponding devices which measure density are referred to as "densitometers". In fact, densitometers do not measure density but rather the ratio between the intensity ($I_0$) of light shone on or through a surface, and the light that reaches the detector in the instrument. This ratio is called reflectance (R) or the transmittance, depending on whether the instrument measures reflective materials such as ink and paper, or transmissive materials such as film.

Density is a logarithmic function:

$$D = -\log_{10} R = -\log_{10} \left(\frac{I_1}{I_0}\right)$$

In color halftoning, the illusion of a continuous-tone color is created when dots of primary colors are printed next to each other or on top of each other. A density may therefore be assigned to black dots or dots of the primary colors. The perceived density depends on the size of the dots.

However, the problem is that the increases in density ( which depends on the sizes of the dots) are not proportional to the increase in exposure. In the example, increasing a dot having a 1 00%-pixel to a dot having a 100%-pixel and a 33%-pixel does not increase the size S of the dot to the same amount as an increase in exposure from a dot including a pixel of 100% and a pixel of 33% to a dot including a pixel of 100% and a pixel of 66%.

$$\Delta S_{1\rightarrow 1.33} = S(1.33) - S(1) \neq S(1.66) - S(1.33) = \Delta S_{1.33\rightarrow 1.66}$$

Furthermore, the increase in size from a dot including a pixel of 100% and a pixel of 66% to two pixels of 100% may also be different from the two increases just mentioned (1 → 1.33, 1.33 → 1.66).

Fig. 9 refers to the situation in which dots of individual 1 00%-pixels are replaced with dots of a 100%-pixel and a 33%-pixel. The first dot screen of Fig. 9 shows a dot pattern after the dot turn-on, in which ten dots of 100%-pixels exist. This dot pattern has a density level which is referred to as $L_0$. Now, two increments are performed each of which increases the power of the laser/exposure by the same amount. It is then checked which increase of dot size is obtained. Two of the dots (having a 100% pixel) are changed into a dot which is composed of a 100%-pixel and a 33%-pixel. This dot pattern has a density level $L_1$. Then, again the same amount of exposure is added by changing two 100%-pixels into two dots each of which is composed of a 100%-pixel and a 33% pixel which leads to the density level $L_2$.

$$L_1 = L_0 + 2\Delta S_{1\rightarrow 1.33}$$
$$L_2 = L_1 + 2\Delta S_{1\rightarrow 1.33}$$

Increase in density:

$$L_1 - L_0 = 2\Delta S_{1\rightarrow 1.33}$$
$$L_2 - L_1 = 2\Delta S_{1\rightarrow 1.33}$$
$$\Rightarrow L_1 - L_0 = L_2 - L_1$$

In this example, it has been shown that the two equal increments in exposure lead to two equal increments in density/dot size. However, this is only the case if in both exposure increments refer to the same transitions (here: from 0% to 33%). If the two exposure increments increase the power by the same amount but refer to different transitions, the increments in dot size will not be equal, as will be shown in Fig. 11.

It should be mentioned that the screens shown in this and in the following figures do not correspond to the exemplary embodiment of cyan and magenta screens represented in the Figs. 3, 4, 6, and 7, but illustrate dot growth by other exemplary screens. What is shown in this and in the following figures can also apply to the Figs. 3, 4, 6, and 7.

Fig. 10: Change in the number of pixels of different exposures

Fig. 10 summarizes the idea presented in Fig. 9 by means of showing the numbers of pixels changed. $L_0$ refers to a density level in which 60 pixels are set to 0%, and 10 pixels are set to 100%. Density level $L_1$ is obtained by increasing the exposure of two 0%-pixels to an exposure of 33%, while the number of 100%-pixels is kept constant. In a further step, density level $L_2$ is obtained by increasing the exposure of two 0%-pixels to an exposure of 33%.

Fig. 11: Density increment of 3$^{rd}$ and 4$^{th}$ phase

Fig. 11 shows the transitions made in the 3$^{rd}$ phase (see Fig. 8) from density level $L_0$ to density level $L_1$, in which pixels are set from 33% to 66% intensity. Moreover, it shows the transition made in the 4$^{th}$ phase (see Fig. 8) from density level $L_1$ to density level $L_2$. It is noted that the laser power needed to get from $L_0$ to $L_1$ is the same as to get from $L_1$ to $L_2$. However, attention is drawn to the fact that the increase in density is not the same. To get from $L_0$ to $L_1$, 10 pixels are set from 33%-exposure to 66%, which increase the sizes of the corresponding dots by an amount denoted as $10\Delta S_{1.33\rightarrow 1.66}$. Setting 10 pixels from 66% to 100% which indicates the transition from $L_1$ to $L_2$ refers to an increase in dot size denoted as $10\Delta S_{1.66\rightarrow 2}$. Thereby, it is shown that the increase of density in the 3$^{rd}$ phase is different from the increase of density in the 4$^{th}$ phase.

Fig. 12: Change in numbers of pixels

Fig. 12 summarizes the change in numbers of pixels of different intensities when going from $L_0$ to $L_1$ and from

$L_1$ to $L_2$ (see Fig. 11). Initially, 50 pixels of 0% exposure, 10 pixels of 33% exposure, 0 pixels of 66% exposure and 10 pixels of 100% exposure are provided. In the 2nd phase, all 10 33%-pixels are set from 33% to 66%, or to put it differently, only pixels of one sort (namely the 33%-pixels) are increased in exposure. Then, when getting from level $L_1$ to $L_2$, only pixels of 66% exposure are increased in exposure. Since in each step, only pixels of one sort are increased in exposure, the increase in size/density is not the same for the two steps. Using halftone patterns like this may lead to contouring effects.

Fig. 13: Distribution of pixels with different exposures in partially regular clusters

The diagram of Fig. 13 shows the numbers of pixels with zero power/exposure (curve A), 33% power (curve B), 66% power (curve C) and 100% power (curve D). To explain the diagram, it is assumed that a 120 x 120 super-tile is used on a homogenous part of an image having the same continuous-tone value. As explained in the context of Fig. 1, in a first phase (dot turn-on phase), 0%-pixels are set to 100%-pixel which form the center of the dots (clusters). When going to a darker level, all 1440 clusters include a single 100%-pixel. The procedure continues in the same way as explained in Fig. 8, until all 1440 dots include four 100%-pixels. Then, a new phase begins, which is essentially the central idea of the invention and is therefore called for in claim 1. To represent higher continuous-tone values (which are more intense), 33%-pixels are added and 66%-pixels are added, until 480 33%-pixels and 66%-pixels have been added. From this point onward, when representing higher continuous-tone values, the 480 33%-pixels and 66%-pixels are kept constant, and 1 00%-pixels are added to the dot pattern by setting 0%-pixels to 100%. The question arises, how the 1 00%-pixels are added. This happens as follows: a number of pixels are set from 0% to 33%, the same number of pixels are set from 33% to 66% and again the same number of dots is set from 66% to 100%. Thereby, the same amounts of exposure are added to the individual clusters. In this phase, however, the shape of the clusters changes and the regular structure of the dots is not maintained. Since the clusters may have different shapes, the pattern may look grainier. But in the shadows (darker regions), the clusters are large enough for the difference in cluster shapes not to be perceptible, thus there is no increase in graininess. Consequently, regular clusters are applied for lighter continuous-tone values.

It is expressly mentioned, however, that the teaching of keeping intermediate values constant for different continuous-tone values may also be applied for continuous-tone values of highlight areas.

The method would still be valid if the number of pixels on intermediate values were allowed to vary while keeping it substantially constant, say within 20% of the nominal number of pixels.

Fig. 14: Density increment

Fig. 14 illustrates two steps which add exposures of different levels such that the increase of density of the first step is the same as the increase of density of the second step. $L_0$ refers to the level of density of a dot having a 100% pixel, a dot having a 100%-pixel and a 33%-pixel, and a dot having a 100%-pixel and a 66%-pixel. Now, the density of the pattern is increased by changing a 0%-pixel into a 33%-pixel, the 33%-pixel into a 66%-pixel and the 66%-pixel into a 100%-pixel. As can be seen on the right side of Fig. 14, the increase of density when going from level $L_0$ to level $L_1$ is the same as the increase of density when going from level $L_1$ to level $L_2$. It should be mentioned that it would also be within the scope of the invention to simply add one 100%-pixel to the dot pattern of $L_0$. However, to obtain the desired dot shape, it may be reasonable to change the pixels from one intensity to the next higher level of intensity.

Fig. 15: Change in numbers: shifting the pixels into higher levels

Fig. 15 summarizes the number of pixels of the different intensities. In density level $L_0$, 23 0%-pixels, one 33%-pixel, one 66%-pixel and three 1 00%-pixels are provided. In a first step, one of the 0%-pixels is set to 33%, the 33%-pixel is set to 66%, and the 66%-pixel is set to 100%. Going further to $L_2$, one of the 0%-pixels is set to 33%, the 33%-pixel is set to 66%, and the 66%-pixel is set to 100%. Consequently, in $L_2$, there are 21 pixels of 0%, one pixel of 33%, one pixel of 33%, and 5 pixels of 100%. The change in numbers of pixels of the different intensities may also be conceived as shifting pixels from one intensity level into the next higher intensity level. In effect, the intermediate intensity levels remain constant in numbers.

Hence, the step from $L_0$ to $L_1$ and from $L_1$ to $L_2$ refers to the same increment of density. This effect is obtained by an averaging effect since in both steps, density increments of all three types ($1 \rightarrow 1.33$, $1.33 \rightarrow 1.66$, $1.66 \rightarrow 2$) are performed. Thereby, halftone dot patterns having undesired contouring effects may be reduced since a uniform increase in continuous-tone values is reproduced by a uniform increase of the density of the dot patterns.

Thus, some of the aspects of the invention described above enable halftone dot patterns with less contouring effects to be created by keeping the number of pixels of intermediate intensities constant when representing different continuous-tone values.

All publications and existing systems mentioned are herein incorporated by reference.

Although certain methods and products constructed in accordance with the teachings of the invention have been described herein, the scope of coverage of this patent is not limited thereto. On the contrary, this patent covers all embodiments of the teachings of the invention fairly falling within the scope of the appended claims either literally or under the doctrine of equivalents.

## Claims

**1.** A method of transforming continuous-tone values to a halftone representation with halftone dot patterns, a dot pattern being composed of dots, a dot being composed of a plurality of pixels, wherein a pixel can be assigned zero intensity, or one out of a set of intermediate intensities or full intensity, wherein the transformation is such that
a first continuous-tone value is transformed into a number of pixels of zero intensity, a number of pixels of the one or more intermediate intensities, and a number of pixels of full intensity, and
a second, higher continuous-tone value is transformed into a reduced number of pixels of zero intensity and a correspondingly increased number of pixels with full intensity, while leaving the number of pixels of the one or more intermediate intensities substantially constant.

**2.** The method of claim 1, wherein, when going from the representation of the first continuous-tone value to the second, higher continuous-tone value, some pixels of zero intensity are changed into the first intermediate intensity, and some pixels of any intermediate intensity are changed into the next higher intermediate intensity, and some pixels of the highest intermediate intensity are changed into the full intensity.

**3.** The method of claim 1 or 2, wherein for highlight continuous-tone values, the numbers of pixels with intermediate intensities are varied to obtain regular dot patterns, while in shadow areas the numbers of pixels with intermediate intensities are substantially equal.

**4.** The method of any one of claims 1 to 3, wherein the halftone dot patterns for highlight areas have regular dot clusters, and the halftone dot patterns for shadow areas have irregular dot patterns.

**5.** The method of any one of claims 1 to 4, wherein a dot turn-on is defined by means of a halftone tile indicating dot centers.

**6.** The method of claim 5, wherein a plurality of halftone tiles modified so that their frequency response has low visibility are put together to form a super-tile which is replicated over the image to be reproduced.

**7.** The method of claim 6, wherein halftone tiles for different primary colors are obtained by rotating through an angle.

**8.** The method of any one of claims 1 to 7, wherein the dots grow to form a line structure when going from a low continuous-tone value to a higher continuous-tone value.

**9.** A printing system for transforming continuous-tone values to a halftone representation with halftone dot patterns, a dot pattern being composed of dots, a dot being composed of a plurality of pixels, wherein a pixel can be assigned zero intensity, or one out of a set of intermediate intensities or full intensity, the printing system being programmed to perform the transformation which is such that:

a first continuous-tone value is transformed into a number of pixels of zero intensity, a number of pixels of the one or more intermediate intensities, and a number of pixels of full intensity, and
a second, higher continuous-tone value is transformed into a reduced number of pixels of zero intensity and a correspondingly increased number of pixels with full intensity, while leaving the number of pixels of the one or more intermediate intensities substantially constant.

**10.** A computer program product which is either in the form of a machine-readable medium with program code stored on it, or in the form of a propagated signal comprising a representation of program code,
wherein the program code is arranged to carry out a method, when executed on a computer system, of transforming continuous-tone values to a halftone representation with halftone dot patterns, a dot pattern being composed of dots, a dot being composed of a plurality of pixels, wherein a pixel can be assigned zero intensity, or one out of a set of intermediate intensities or full intensity, wherein the transformation is such that

a first continuous-tone value is transformed into a number of pixels of zero intensity, a number of pixels of the one or more intermediate intensities, and a number of pixels of full intensity, and
a second, higher continuous-tone value is transformed into a reduced number of pixels of zero intensity and a correspondingly increased number of pixels with full intensity, while leaving the number of pixels of the one or more intermediate intensities substantially constant.

Fig. 1

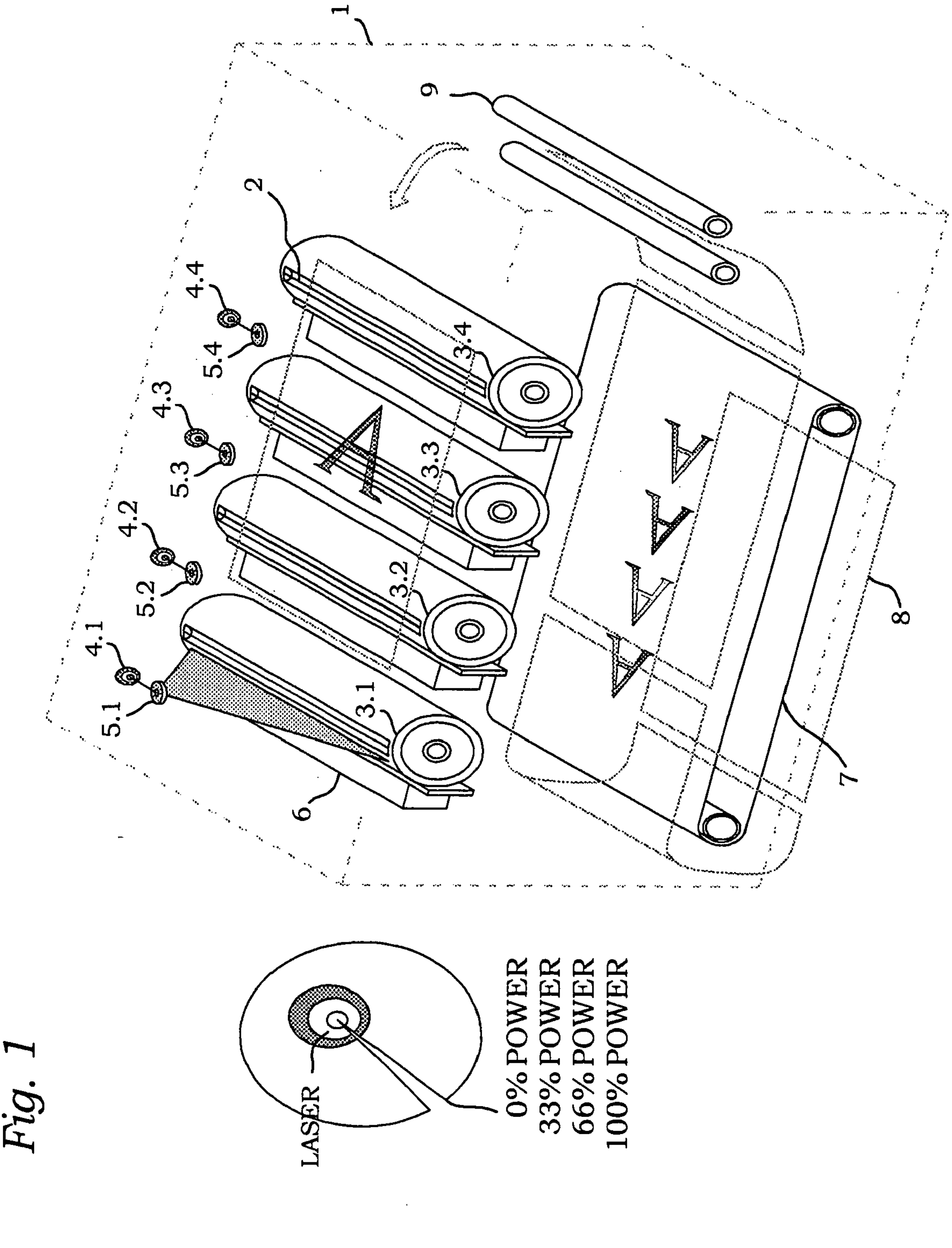
1
2
3.1
3.2
3.3
3.4
4.1
4.2
4.3
4.4
5.1
5.2
5.3
5.4
6
7
8
9
LASER
0% POWER
33% POWER
66% POWER
100% POWER

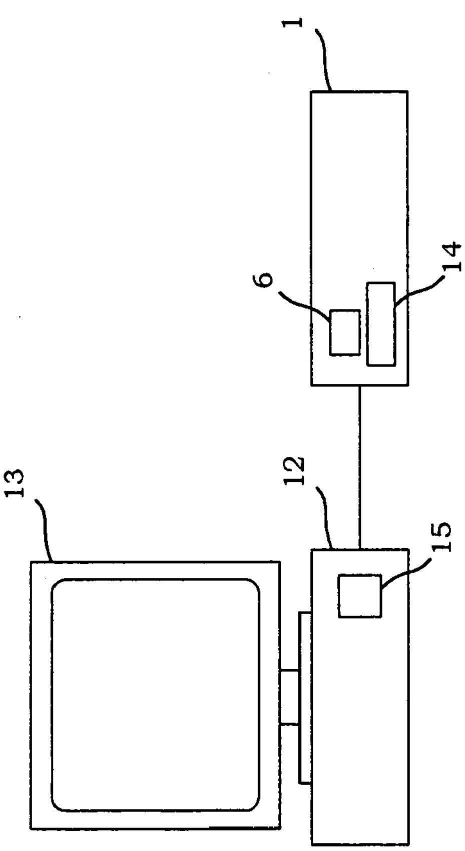


Fig. 2

Fig. 3b

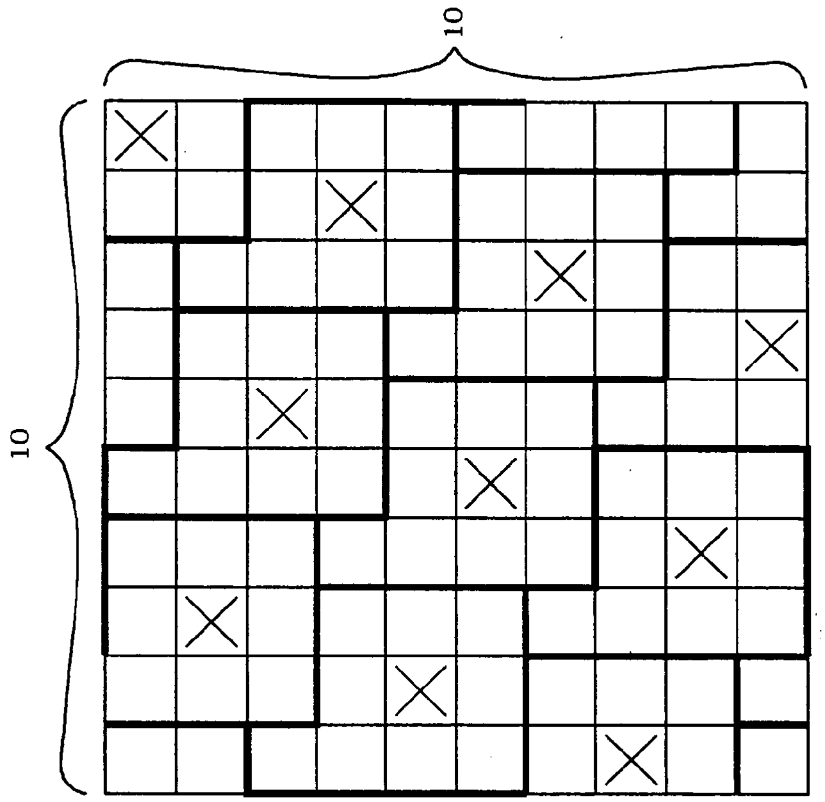


10 x 10 MAGENTA TILE

Fig. 3a

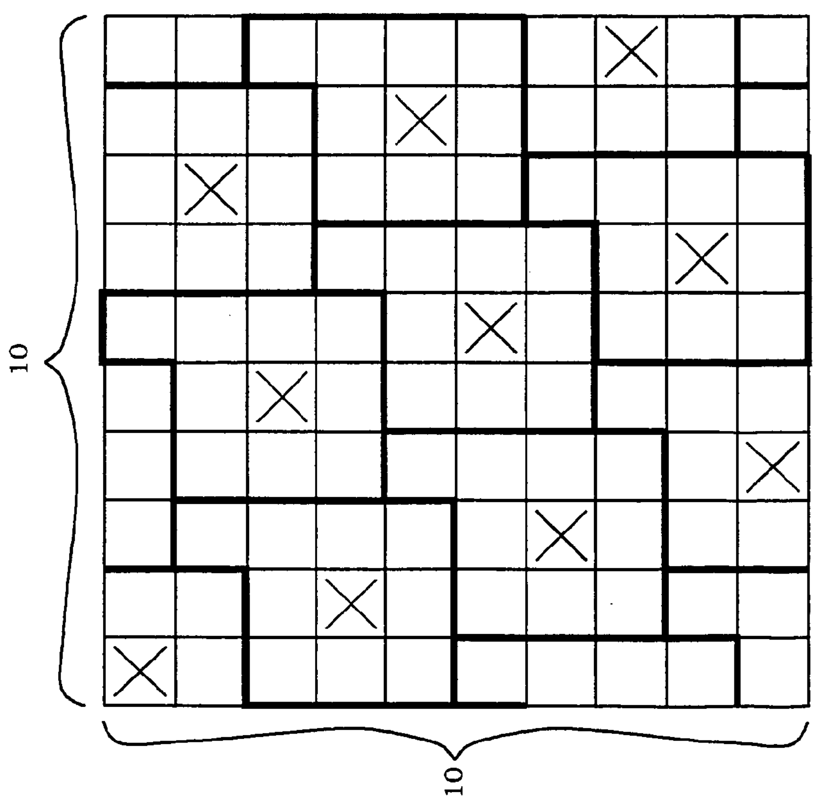


10 x 10 CYAN TILE

*Fig. 4*

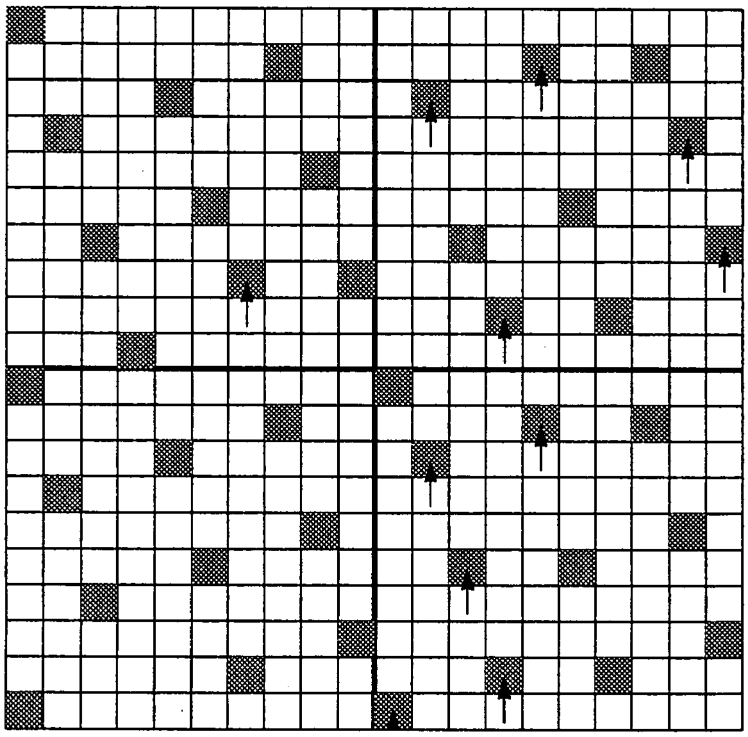

40 x 40
CYAN SUPER-TILE

Fig. 5

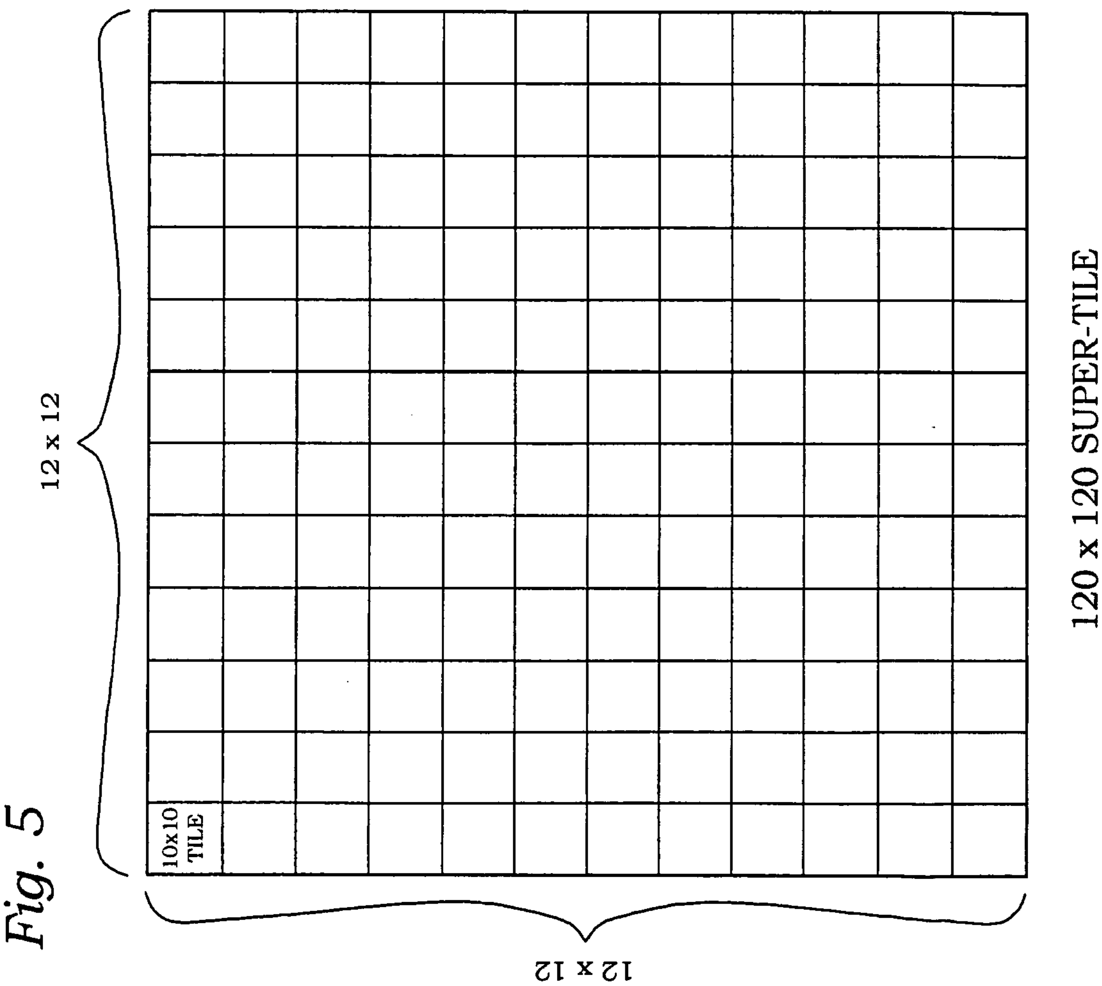

Fig. 6

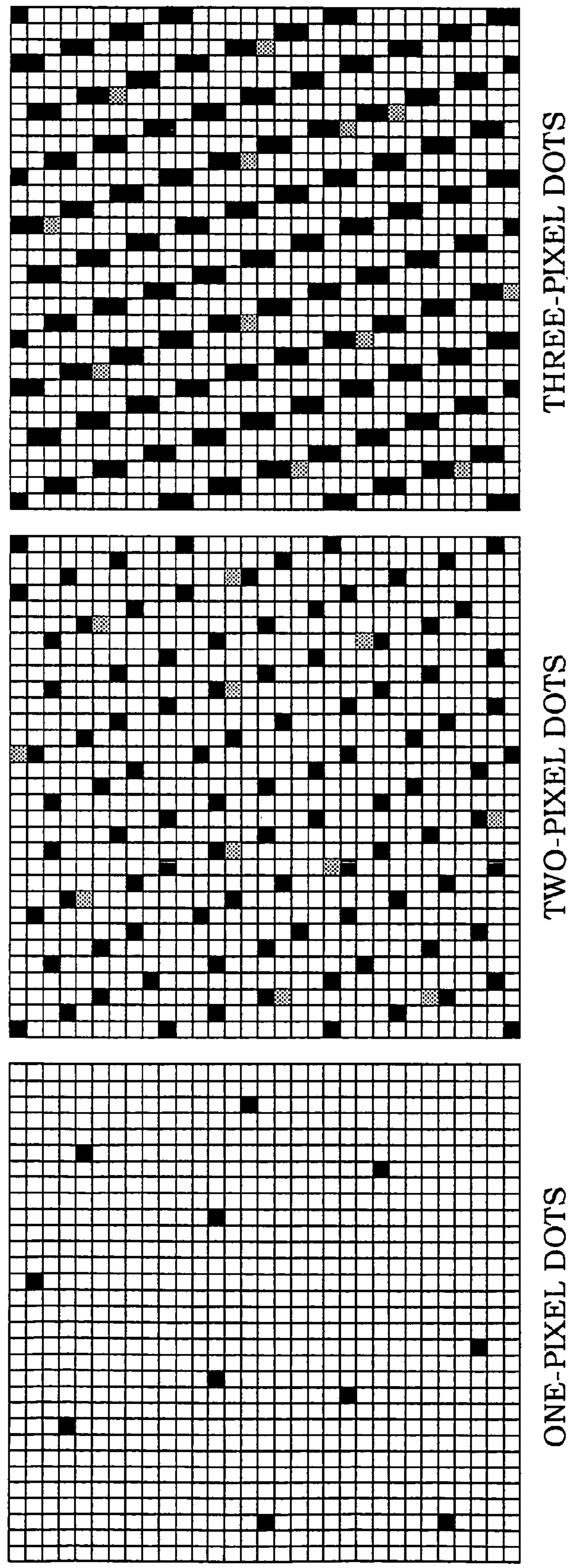

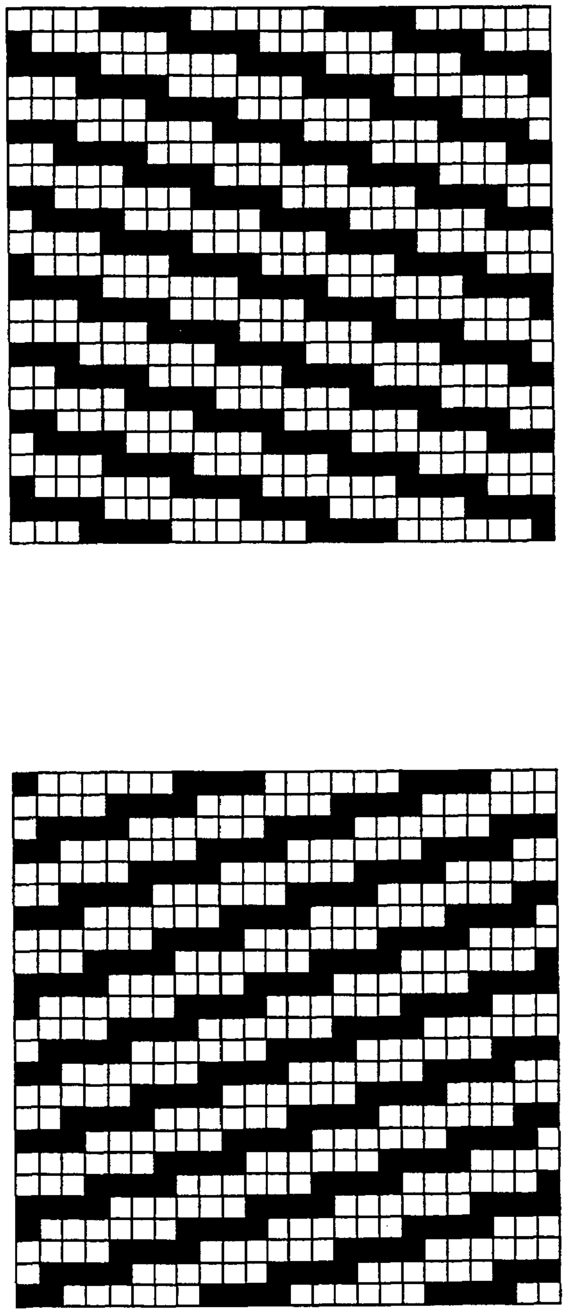

MAGENTA

CYAN

Fig. 7

Fig. 8

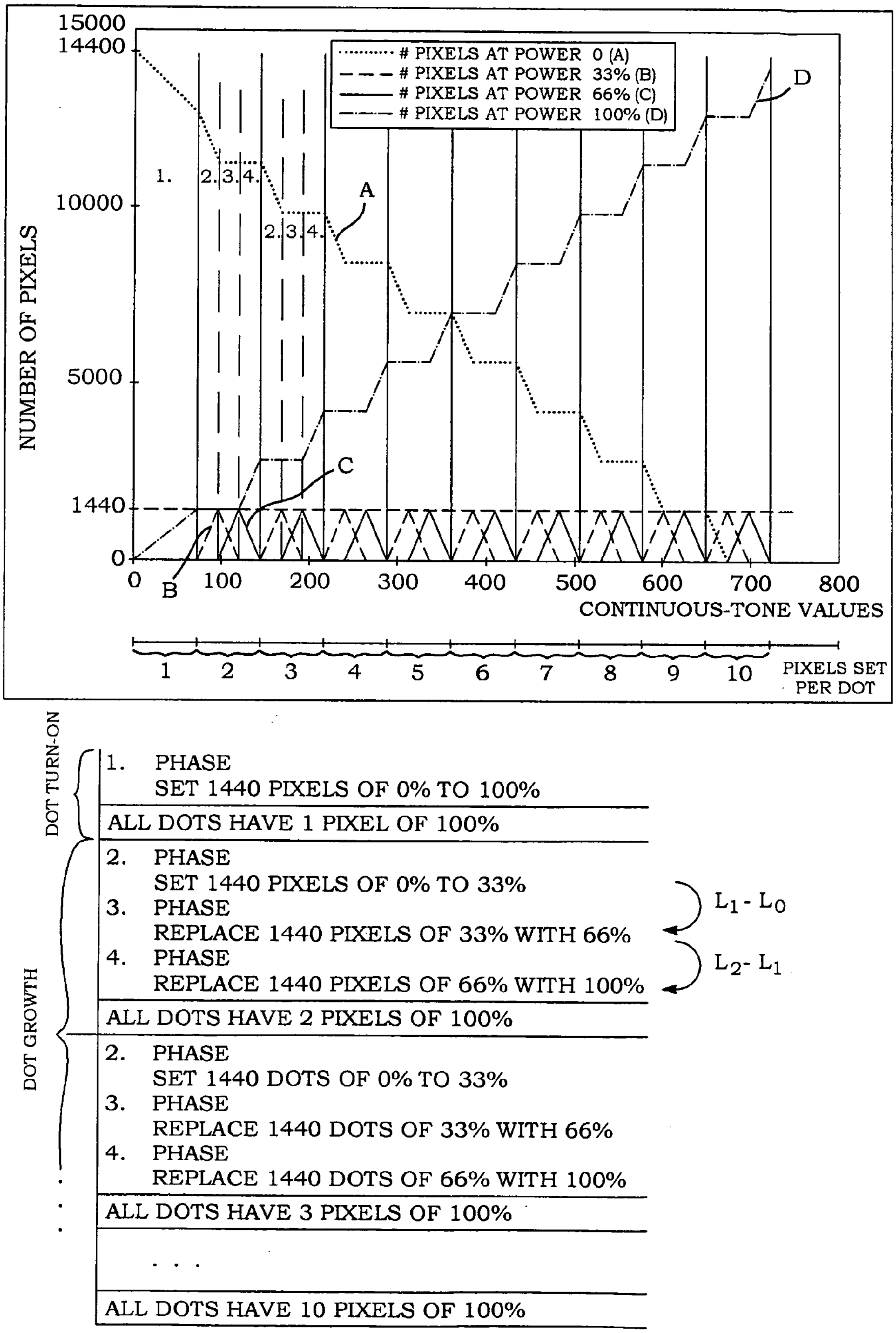

# PIXELS AT POWER 0 (A)
# PIXELS AT POWER 33% (B)
# PIXELS AT POWER 66% (C)
# PIXELS AT POWER 100% (D)
NUMBER OF PIXELS
15000
14400
10000
5000
1440
0
A
B
C
D
1.
2. 3. 4.
2. 3. 4.
0
100
200
300
400
500
600
700
800
CONTINUOUS-TONE VALUES
1 2 3 4 5 6 7 8 9 10
PIXELS SET PER DOT
DOT TURN-ON
1. PHASE
SET 1440 PIXELS OF 0% TO 100%
ALL DOTS HAVE 1 PIXEL OF 100%
DOT GROWTH
2. PHASE
SET 1440 PIXELS OF 0% TO 33%
3. PHASE
REPLACE 1440 PIXELS OF 33% WITH 66%
4. PHASE
REPLACE 1440 PIXELS OF 66% WITH 100%
L1 - L0
L2 - L1
ALL DOTS HAVE 2 PIXELS OF 100%
2. PHASE
SET 1440 DOTS OF 0% TO 33%
3. PHASE
REPLACE 1440 DOTS OF 33% WITH 66%
4. PHASE
REPLACE 1440 DOTS OF 66% WITH 100%
ALL DOTS HAVE 3 PIXELS OF 100%
. . .
ALL DOTS HAVE 10 PIXELS OF 100%

*Fig. 9*

1. $L_0$

| | | | | | | | | | |
|---|---|---|---|---|---|---|---|---|---|
| 100 | 0 | 0 | 100 | 0 | 0 | 100 | 0 | 0 | 100 |
| 0 | 0 | 0 | 0 | 0 | 0 | 0 | 0 | 0 | 0 |
| 0 | 100 | 0 | 0 | 100 | 0 | 0 | 100 | 0 | 0 |
| 0 | 0 | 0 | 0 | 0 | 0 | 0 | 0 | 0 | 0 |
| 0 | 0 | 100 | 0 | 0 | 100 | 0 | 0 | 100 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |

2. $L_1$

| | | | | | | | | | |
|---|---|---|---|---|---|---|---|---|---|
| 100 | 0 | 0 | 100 | 0 | 0 | 100 | 0 | 0 | 100 |
| 33 | 0 | 0 | 33 | 0 | 0 | 0 | 0 | 0 | 0 |
| 0 | 100 | 0 | 0 | 100 | 0 | 0 | 100 | 0 | 0 |
| 0 | 0 | 0 | 0 | 0 | 0 | 0 | 0 | 0 | 0 |
| 0 | 0 | 100 | 0 | 0 | 100 | 0 | 0 | 100 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |

3. $L_2$

| | | | | | | | | | |
|---|---|---|---|---|---|---|---|---|---|
| 100 | 0 | 0 | 100 | 0 | 0 | 100 | 0 | 0 | 100 |
| 33 | 0 | 0 | 33 | 0 | 0 | 33 | 0 | 0 | 33 |
| 0 | 100 | 0 | 0 | 100 | 0 | 0 | 100 | 0 | 0 |
| 0 | 0 | 0 | 0 | 0 | 0 | 0 | 0 | 0 | 0 |
| 0 | 0 | 100 | 0 | 0 | 100 | 0 | 0 | 100 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |

$L_1 = L_0 + 2\ \Delta S_{1\rightarrow 1.33}$

$L_2 = L_1 + 2\ \Delta S_{1\rightarrow 1.33}$

INCREMENT IN DENSITY:

$L_1 - L_0 = 2 \cdot \Delta S_{1\rightarrow 1.33}$

$L_2 - L_1 = 2 \cdot \Delta S_{1\rightarrow 1.33}$

$\rightarrow L_1 - L_0 = L_2 - L_1$

TWO INCREMENTS WITHIN 2. PHASE

*Fig. 10*

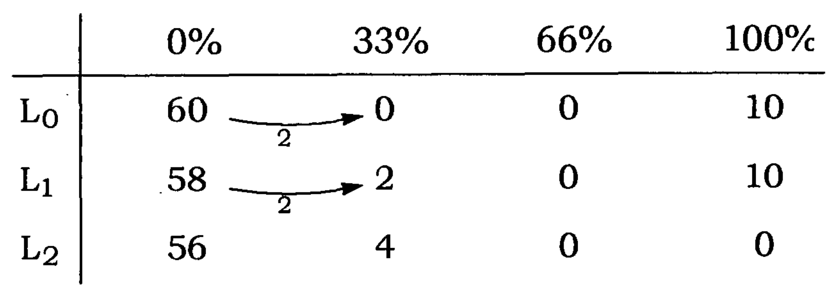

*Fig. 11*

$L_0$

| | | | | | | | | | |
|---|---|---|---|---|---|---|---|---|---|
| 100 | 0 | 0 | 100 | 0 | 0 | 100 | 0 | 0 | 100 |
| 33 | 0 | 0 | 33 | 0 | 0 | 33 | 0 | 0 | 33 |
| 0 | 100 | 0 | 0 | 100 | 0 | 0 | 100 | 0 | 0 |
| 0 | 33 | 0 | 0 | 33 | 0 | 0 | 33 | 0 | 0 |
| 0 | 0 | 100 | 0 | 0 | 100 | 0 | 0 | 100 | 0 |
| 0 | 0 | 33 | 0 | 0 | 33 | 0 | 0 | 33 | 0 |
| 0 | 0 | 0 | 0 | 0 | 0 | 0 | 0 | 0 | 0 |

$L_1$

| | | | | | | | | | |
|---|---|---|---|---|---|---|---|---|---|
| 100 | 0 | 0 | 100 | 0 | 0 | 100 | 0 | 0 | 100 |
| 66 | 0 | 0 | 66 | 0 | 0 | 66 | 0 | 0 | 66 |
| 0 | 100 | 0 | 0 | 100 | 0 | 0 | 100 | 0 | 0 |
| 0 | 66 | 0 | 0 | 66 | 0 | 0 | 66 | 0 | 0 |
| 0 | 0 | 100 | 0 | 0 | 100 | 0 | 0 | 100 | 0 |
| 0 | 0 | 66 | 0 | 0 | 66 | 0 | 0 | 66 | 0 |
| 0 | 0 | 0 | 0 | 0 | 0 | 0 | 0 | 0 | 0 |

$L_2$

| | | | | | | | | | |
|---|---|---|---|---|---|---|---|---|---|
| 100 | 0 | 0 | 100 | 0 | 0 | 100 | 0 | 0 | 100 |
| 100 | 0 | 0 | 100 | 0 | 0 | 100 | 0 | 0 | 100 |
| 0 | 100 | 0 | 0 | 100 | 0 | 0 | 100 | 0 | 0 |
| 0 | 100 | 0 | 0 | 100 | 0 | 0 | 100 | 0 | 0 |
| 0 | 0 | 100 | 0 | 0 | 100 | 0 | 0 | 100 | 0 |
| 0 | 0 | 100 | 0 | 0 | 100 | 0 | 0 | 100 | 0 |
| 0 | 0 | 0 | 0 | 0 | 0 | 0 | 0 | 0 | 0 |

$L_1 = L_0 + 10\,\Delta S_{1.33 \rightarrow 1.66}$

$L_2 = L_1 + 10\,\Delta S_{1.66 \rightarrow 2}$

INCREMENT IN DENSITY:

$L_1 - L_0 = 10\,\Delta S_{1.33 \rightarrow 1.66}$

$L_2 - L_1 = 10\,\Delta S_{1.66 \rightarrow 2}$

$\rightarrow L_1 - L_0 \neq L_2 - L_1$

TWO INCREMENTS IN 3. AND 4. PHASE

*Fig. 12*

| | 0% | 33% | 66% | 100% |
|---|---|---|---|---|
| $L_0$ | 50 | 10 | 0 | 10 |
| $L_1$ | 50 | 0 | 10 | 10 |
| $L_2$ | 50 | 0 | 0 | 20 |

*Fig. 13*

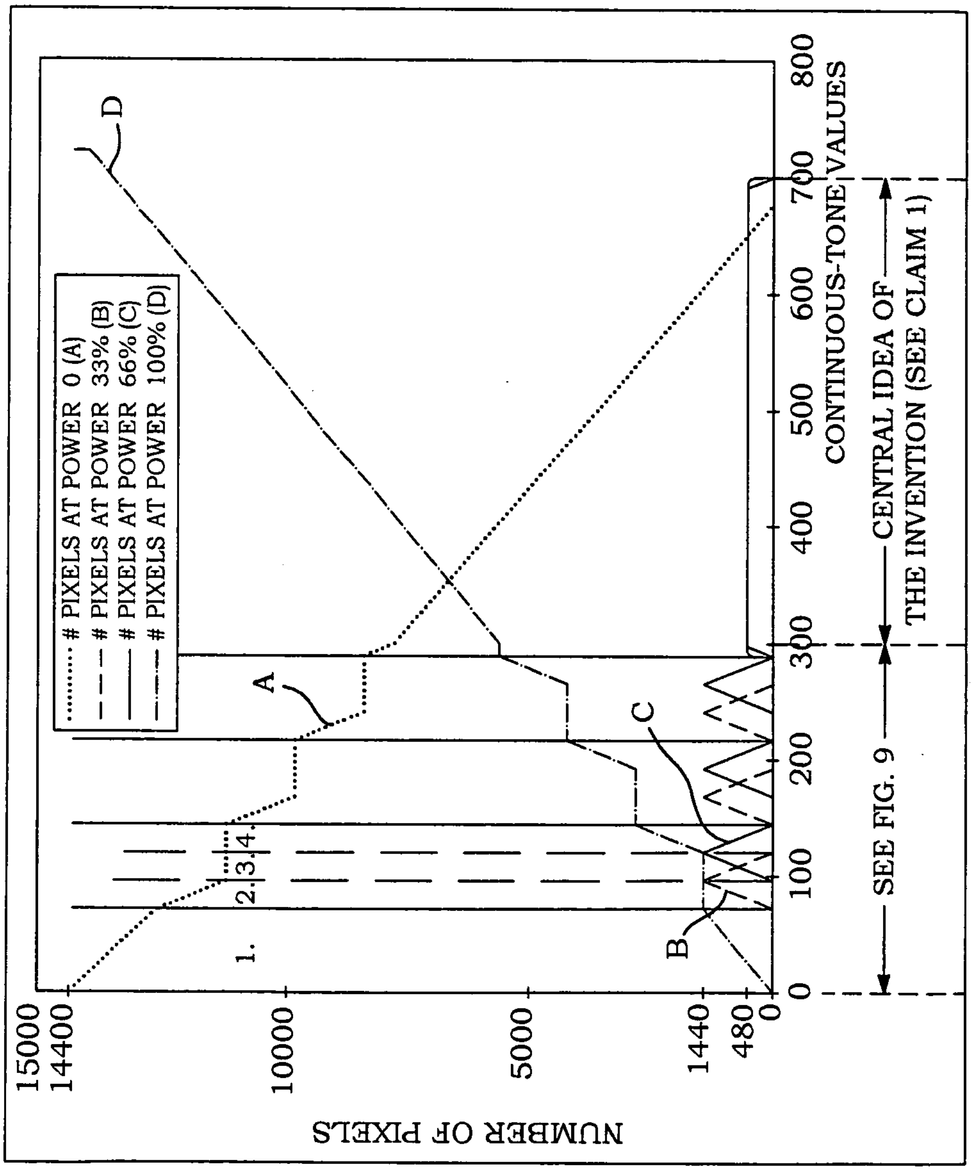

NUMBER OF PIXELS
15000
14400
10000
5000
1440
480
0
0
100
200
300
400
500
600
700
800
CONTINUOUS-TONE VALUES
# PIXELS AT POWER 0 (A)
# PIXELS AT POWER 33% (B)
# PIXELS AT POWER 66% (C)
# PIXELS AT POWER 100% (D)
A
B
C
D
1.
2.
3.
4.
SEE FIG. 9
CENTRAL IDEA OF
THE INVENTION (SEE CLAIM 1)

*Fig. 14*

$L_0$

| | | | | | | |
|---|---|---|---|---|---|---|
| 100 | 0 | 0 | 0 | 100 | 0 | 0 |
| 33 | 0 | 0 | 0 | 0 | 0 | 0 |
| 0 | 0 | 100 | 0 | 0 | 0 | 0 |
| 0 | 0 | 66 | 0 | 0 | 0 | 0 |

$L_1$

| | | | | | | |
|---|---|---|---|---|---|---|
| 100 | 0 | 0 | 0 | 100 | 0 | 0 |
| 66 | 0 | 0 | 0 | 33 | 0 | 66 |
| 0 | 0 | 100 | 0 | 0 | 0 | 0 |
| 0 | 0 | 100 | 0 | 0 | 0 | 0 |

$L_2$

| | | | | | | |
|---|---|---|---|---|---|---|
| 100 | 0 | 0 | 0 | 100 | 0 | 0 |
| 100 | 0 | 0 | 0 | 66 | 0 | 0 |
| 0 | 0 | 100 | 33 | 0 | 0 | 0 |
| 0 | 0 | 100 | 0 | 0 | 0 | 0 |

$L_1 = L_0 + \Delta S_{1\to 1.33} + \Delta S_{1.33\to 1.66} + \Delta S_{1.66\to 2}$

$L_2 = L_1 + \Delta S_{1\to 1.33} + \Delta S_{1.33\to 1.66} + \Delta S_{1.66\to 2}$

INCREMENT IN DENSITY:

$L_1 - L_0 = \Delta S_{1\to 1.33} + \Delta S_{1.33\to 1.66} + \Delta S_{1.66\to 2}$

$L_2 - L_1 = \Delta S_{1\to 1.33} + \Delta S_{1.33\to 1.66} + \Delta S_{1.66\to 2}$

$\Rightarrow L_1 - L_0 = L_2 - L_1$

Fig. 15

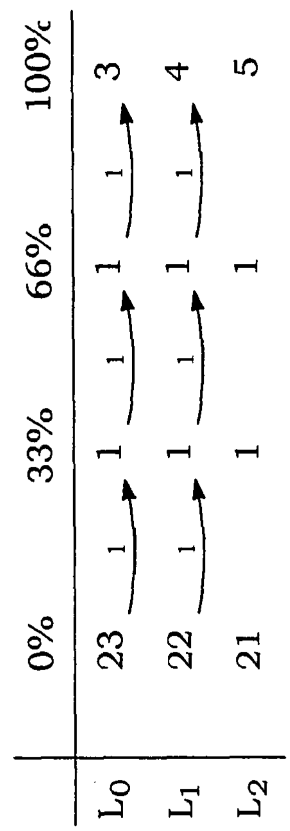

European Patent Office

# EUROPEAN SEARCH REPORT

Application Number
EP 07 01 4205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/104041 A (DAINIPPON PRINTING CO LTD [JP]; TAKITA HIROAKI [JP]; OHKUBO TAKAYUKI [) 5 October 2006 (2006-10-05)<br>* figures 7,8,18,19 *<br>----- | 1-10 | INV.<br>H04N1/40<br>H04N1/52 |
| X | GB 2 091 518 A (DAINIPPON SCREEN MFG) 28 July 1982 (1982-07-28)<br>* page 2, left-hand column, line 46 - right-hand column, line 92; figures 1-3 *<br>----- | 1-3,9,10 | |
| X | EP 1 631 056 A (KONICA MINOLTA HOLDINGS INC [JP]) 1 March 2006 (2006-03-01)<br>* paragraphs [0070] - [0095]; figures 7-12 *<br>----- | 1-3,9,10 | |
| X | US 2004/017415 A1 (NUNOKAWA HIROKAZU [JP]) 29 January 2004 (2004-01-29)<br>* paragraphs [0066] - [0074]; figures 6,7 *<br>----- | 1,9,10 | |
| X | US 5 077 615 A (TSUJI KATSUHISA [JP]) 31 December 1991 (1991-12-31)<br>* column 8, line 47 - column 10, line 21; figure 12 *<br>----- | 1,9,10 | TECHNICAL FIELDS SEARCHED (IPC)<br>H04N |
| A,D | EP 0 892 549 A (EASTMAN KODAK CO [US] EASTMAN KODAK CO NEXPRESS SOLUTIONS LLC [US]) 20 January 1999 (1999-01-20)<br>* figures 14-16 *<br>----- | 3,4,7,8 | |

The present search report has been drawn up for all claims

2

| Place of search | Date of completion of the search | Examiner |
|---|---|---|
| Munich | 11 December 2007 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 07 01 4205

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2007

| Patent document cited in search report | Publication date | Patent family member(s) | Publication date |
|---|---|---|---|
| WO 2006104041 A | 05-10-2006 | JP 2006279596 A | 12-10-2006 |
| GB 2091518 A | 28-07-1982 | DE 3201373 A1 | 05-08-1982 |
| | | FR 2498345 A1 | 23-07-1982 |
| | | JP 1426255 C | 25-02-1988 |
| | | JP 57120937 A | 28-07-1982 |
| | | JP 62035304 B | 31-07-1987 |
| | | US 4447833 A | 08-05-1984 |
| EP 1631056 A | 01-03-2006 | JP 2006067347 A | 09-03-2006 |
| | | US 2006044339 A1 | 02-03-2006 |
| US 2004017415 A1 | 29-01-2004 | JP 2003291376 A | 14-10-2003 |
| US 5077615 A | 31-12-1991 | JP 3080767 A | 05-04-1991 |
| EP 0892549 A | 20-01-1999 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0892549 A